# EUROPEAN PATENT SPECIFICATION

(11) **EP 4 249 779 B1**
(45) Date of publication and mention of the grant of the patent: **01.07.2026**
(21) Application number: 23160114.7
(22) Date of filing: 06.03.2023
(51) Int. Cl.: F16K 1/34, F16K 1/38, F16K 1/54, F16K 31/06, F16K 1/44

(54) **ELECTRIC-OPERATED VALVE AND METHOD FOR ASSEMBLING THE ELECTRIC-OPERATED VALVE**
ELEKTRISCH BETÄTIGTES VENTIL UND VERFAHREN ZUR MONTAGE DES ELEKTRISCH BETRIEBENEN VENTILS
SOUPAPE À COMMANDE ÉLECTRIQUE ET PROCÉDÉ DE MONTAGE DE LA SOUPAPE À COMMANDE ÉLECTRIQUE

(30) Priority: 22.03.2022 JP 2022045421
(43) Date of publication of application: 27.09.2023
(73) Proprietor: Fujikoki Corporation, Tokyo 158-0082 (JP)
(72) Inventor: YAZAWA, Masashi, Tokyo 158-0082 (JP); OE, Yuma, Tokyo 158-0082 (JP)
(74) Representative: Ter Meer Steinmeister & Partner

(56) References cited:
- EP-A1- 3 296 599
- EP-A2- 1 806 550
- CN-A- 112 923 079
- US-A1- 2020 056 719
- US-A1- 2020 240 536
- US-A1- 2021 356 047

## Description

### BACKGROUND OF THE INVENTION

### 1. Field of the Invention

The present invention relates to an electric-operated valve and a method for assembling the electric-operated valve.

### 2. Description of the Related Art

Japanese Unexamined Patent Application Publication No. 2018-179133 discloses an example of an electric-operated valve according to the related art. The electric-operated valve is installed in a refrigeration cycle system of an air conditioner or the like. The electric-operated valve includes a valve body, a valve member, and a stepping motor for moving the valve member. The stepping motor includes a rotor and a stator. The rotor rotates in response to pulses input to the stepping motor. The valve member moves along with the rotation of the rotor, and the movement of the valve member changes a flow rate of fluid flowing through a valve port of the valve body.

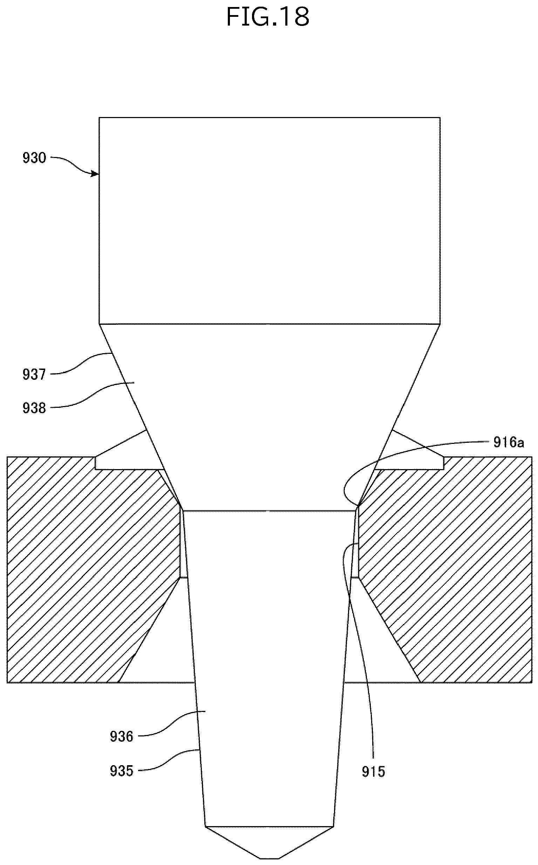

Fig. 18 illustrates an example of the valve member of the electric-operated valve according to the related art. A valve member 930 illustrated in Fig. 18 includes a control portion 935 and a seating portion 937. The control portion 935 includes a control surface 936 that is an outwardly tapered surface. The seating portion 937 includes a seating surface 938 that is an outwardly tapered surface. The upper end of the control surface 936 is provided continuously with the lower end of the seating surface 938. The taper angle of the control surface 936 is smaller than the taper angle of the seating surface 938. A valve port 915 is closed when the seating surface 938 is in contact with an upper end 916a of the valve port 915. The valve port 915 is open and a throttle passage is formed between the valve member 930 and the upper end 916a when the seating surface 938 separates from the upper end 916a.

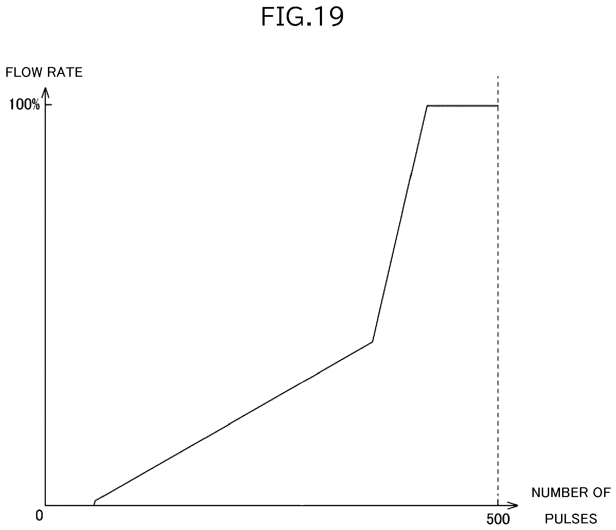

The area of the throttle passage is closely related to the flow rate of the fluid flowing through the valve port 915. Fig. 19 illustrates a graph showing the relationship between the number of pulses input to the stepping motor and the flow rate of the fluid flowing through the valve port 915.

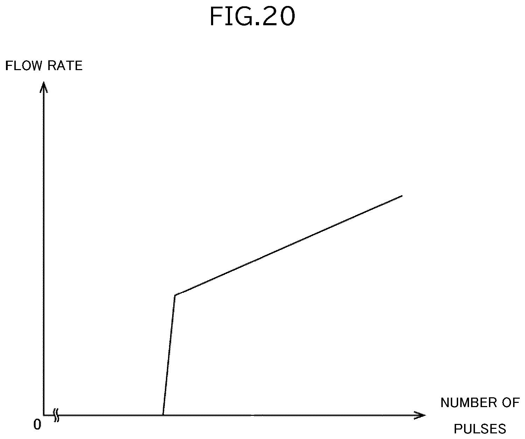

Immediately after the seating surface 938 separates from the upper end 916a, the throttle passage is formed between the seating surface 938 and the upper end 916a. When the seating surface 938 further moves away from the upper end 916a, the throttle passage is formed between the control surface 936 and the upper end 916a. Thus, as illustrated in Fig. 20, immediately after the seating surface 938 separates from the upper end 916a and the valve port 915 is open, the change in the flow rate per pulse is too large to control the flow rate finely.

If the control surface 936, instead of the seating surface 938, is brought into contact with the upper end 916a in the electric-operated valve according to the related art, the change in the flow rate per pulse decreases, resulting in controlling the flow rate finely when the flow rate is low immediately after the valve port 915 is open. However, since the taper angle of the control surface 936 is smaller than the taper angle of the seating surface 938, the upper end 916a wears down faster. As a result, the life of the electric-operated valve is reduced.

US 2020/240536 A1 discloses a flow control valve including a valve body, a stepper motor and valve member. The valve member includes a poppet than can slide longitudinally within a bore of the valve body when the stepper motor receives electricity. A flow control needle, mounted on the poppet of the valve member, is at least partially received in an outlet port of the valve body. The flow control needle cooperates with an inner surface of the outlet port to define a outlet flow orifice that varies in size when the valve member moves between open and closed positions. In the closed position, a seat engagement surface of the valve member contact the valve seat of the valve body to create a fluid-tight seal.

### SUMMARY OF THE INVENTION

Accordingly, it is an object of the present invention to provide a long-life electric-operated valve capable of finely controlling the flow rate of fluid flowing through the valve port when the flow rate is low, and a method for assembling the electric-operated valve.

To achieve the object described above, an electric-operated valve according to an aspect of the present invention includes a valve body that includes a valve port, and a valve member that opens and closes the valve port. The valve member includes a control portion and a movement restriction portion. The control portion includes a control surface that is an outwardly tapered surface. The valve port is closed when the control surface is in contact with one end of the valve port. Movement of the control portion toward the valve port is restricted when the movement restriction portion is in contact with the valve body.

The movement restriction portion comes into contact with the valve body at the same time as the control surface comes into contact with the one end of the valve port.

According to the present invention, the movement of the control portion toward the valve port is restricted at the same time as the valve port is closed. This configuration inhibits the control surface from being pressed to the one end of the valve port after the valve port is closed. The inhibition of pressing the control surface to the one end of the valve port can reduce wear of the one end of the valve port, even though the taper angle of the control surface is small. Accordingly, it is possible to finely control the flow rate of fluid flowing through the valve port when the flow rate is low, and also to extend the life of the electric-operated valve.

In the present invention, the valve body includes a valve seat that is an inwardly tapered surface enclosing the valve port. The movement restriction portion includes a movement restriction surface that is an outwardly tapered surface. The movement of the control portion toward the valve port is restricted when the movement restriction surface is in contact with an outer peripheral edge of the valve seat. The movement restriction surface comes into contact with the outer peripheral edge of the valve seat at the same time as the control surface comes into contact with the one end of the valve port. The movement restriction surface separates from the valve seat at the same time as the control surface separates from the one end of the valve port. As a result, the control surface closes the valve port and the movement restriction surface closes the outer peripheral edge of the valve seat, thereby more effectively inhibiting valve leakage.

According to the present invention, in the state where the control portion is in contact with the one end of the valve port, the movement restriction member is inserted into the mounting hole, and the movement restriction member is brought into contact with the movement restriction portion by adjusting the position of the movement restriction member in the movement direction of the valve member. Next, the movement restriction member is bonded to the body member. This configuration eliminates high-precision machining for manufacturing the valve member and the valve body. Accordingly, it is possible to manufacture the electric-operated valve in which the movement restriction portion comes into contact with the valve body at the same time as the control surface comes into contact with the one end of the valve port at low cost.

According to the present invention, it is possible to finely control the flow rate of the fluid flowing through the valve port when the flow rate is low, and also to extend the life of the electric-operated valve.

### BRIEF DESCRIPTION OF THE DRAWINGS

Fig. 1 is a sectional view of an electric-operated valve according to a first embodiment of the present invention.
Fig. 2 is a sectional view of a valve body assembly of the electric-operated valve in Fig. 1.
Fig. 3 is an enlarged sectional view of a valve member and members in its vicinity of the valve body assembly in Fig. 2.
Fig. 4 is a sectional view of a valve body assembly of an electric-operated valve according to a second embodiment of the present invention.
Fig. 5 is an enlarged sectional view of a valve member and members in its vicinity of the valve body assembly in Fig. 4.
Fig. 6 is a sectional view of a valve body assembly of an electric-operated valve according to a third embodiment of the present invention.
Fig. 7 is an enlarged sectional view of a valve member and members in its vicinity of the valve body assembly in Fig. 6.
Fig. 8 is a sectional view of a valve body assembly of an electric-operated valve according to a first example, not part of the present invention.
Fig. 9 is an enlarged sectional view of a valve member and members in its vicinity of the valve body assembly in Fig. 8.
Fig. 10 is a sectional view of a valve body assembly of an electric-operated valve according to a second example, not part of the present invention.
Fig. 11 is an enlarged sectional view of a valve member and members in its vicinity of the valve body assembly in Fig. 10.
Fig. 12 is a sectional view of a valve body assembly of an electric-operated valve according to a third example, not part of the present invention.
Fig. 13 is an enlarged sectional view of a valve member and members in its vicinity of the valve body assembly in Fig. 12.
Fig. 14 is a sectional view of a valve body assembly of an electric-operated valve according to a fourth example, not part of the present invention.
Fig. 15 is an enlarged sectional view of a valve member and members in its vicinity of the valve body assembly in Fig. 14.
Fig. 16 is a sectional view of a valve body assembly of an electric-operated valve according to an fifth example, not part of the present invention.
Fig. 17 is an enlarged sectional view of a valve member and members in its vicinity of the valve body assembly in Fig. 16.
Fig. 18 is an enlarged sectional view of a valve member and members in its vicinity of an electric-operated valve according to the related art.
Fig. 19 is a graph showing the relationship between the number of pulses input to a stepping motor and a flow rate of fluid flowing through a valve port in the electric-operated valve according to the related art.
Fig. 20 is an enlarged view of a part of the graph in Fig. 19.

### DESCRIPTION OF THE PREFERRED EMBODIMENTS

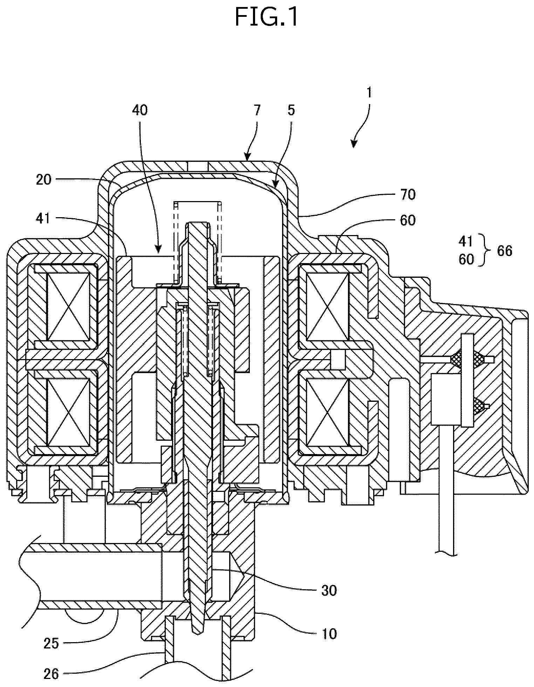

Electric-operated valves according to a first embodiment to an eighth embodiment of the present invention are described below with reference to Fig. 1 to Fig. 17.

The electric-operated valve according to each embodiment is used as, for example, a flow control valve for controlling the flow rate of refrigerant in a refrigeration cycle system of an air conditioner.

### (First Embodiment)

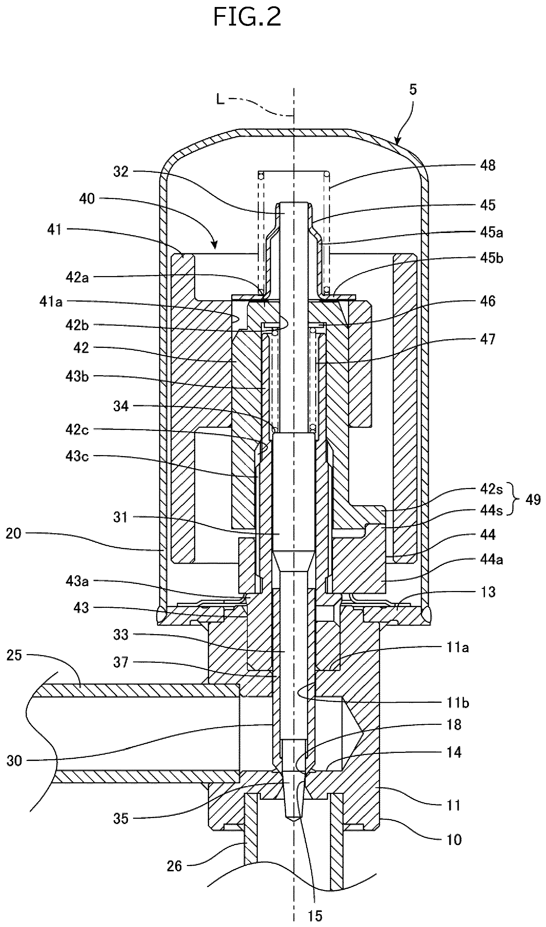

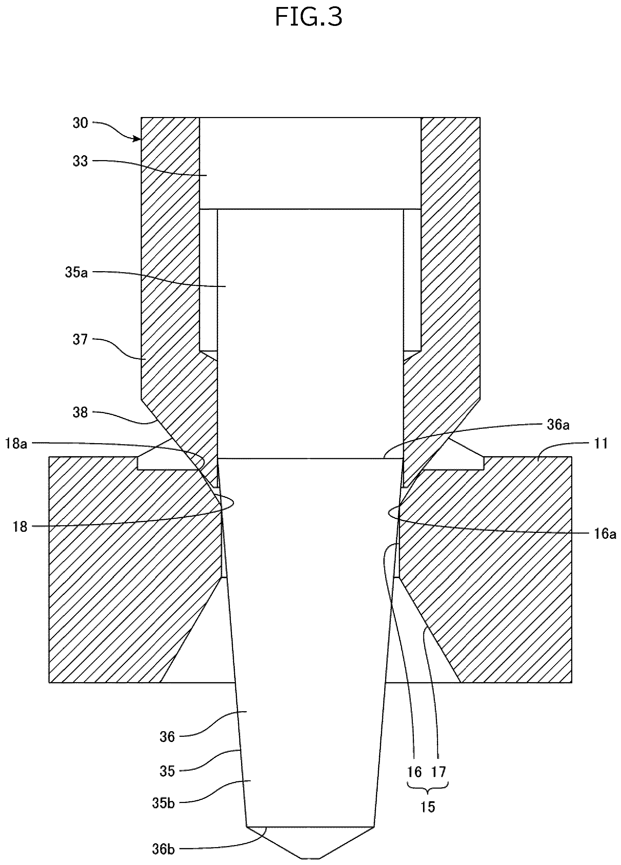

Fig. 1 is a sectional view of an electric-operated valve according to a first embodiment of the present invention. Fig. 2 is a sectional view of a valve body assembly of the electric-operated valve in Fig. 1. Fig. 3 is an enlarged sectional view of a valve member and members in its vicinity of the valve body assembly in Fig. 2. In Fig. 2 and Fig. 3, the valve member (excluding a movement restriction portion) is illustrated in front view.

An electric-operated valve 1 according to the present embodiment includes a valve body assembly 5 and a stator unit 7.

The valve body assembly 5 includes a valve body 10, a can 20, a valve member 30, and a driving section 40.

The valve body 10 includes a body member 11 and a connection member 13.

The body member 11 has a circular columnar shape. The body member 11 includes a valve chamber 14, a valve port 15, and a valve seat 18. The valve port 15 includes an orifice portion 16 and a flow guide portion 17. The orifice portion 16 is enclosed by the valve seat 18 in the valve chamber 14. The valve seat 18 is an annular tapered surface facing inward in a radial direction. An upper end 16a (one end of the valve port 15) of the orifice portion 16 is provided continuously with the inner peripheral edge of the valve seat 18. The upper end 16a is also substantially the inner peripheral edge of the valve seat 18. The orifice portion 16 has a constant inner diameter throughout its longitudinal direction. The upper end of the flow guide portion 17 is provided continuously with the lower end of the orifice portion 16. The flow guide portion 17 has a tapered shape with an inner diameter increasing from the upper end to the lower end.

A first conduit 25 and a second conduit 26 are bonded to the body member 11. The first conduit 25 is disposed in a direction perpendicular to an axis L (lateral direction) and is connected to the valve chamber 14. The second conduit 26 is disposed in a direction of the axis L (up-and-down direction) and is connected to the valve chamber 14 via the valve port 15. The body member 11 includes a fitting hole 11a in a circular shape. The fitting hole 11a is disposed in the upper end surface of the body member 11. A stem hole 11b is provided at the bottom of the fitting hole 11a and communicates with the valve chamber 14. The valve member 30 is disposed in the stem hole 11b movably in the direction of the axis L.

The connection member 13 has an annular plate-like shape. The inner peripheral edge of the connection member 13 is bonded to the upper part of the body member 11. The body member 11 and the connection member 13 are made of metal, such as aluminum alloy, stainless steel, or brass.

The can 20 is made of metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, a third stem portion 33, a control portion 35, and a movement restriction portion 37.

The first stem portion 31, the second stem portion 32, and the third stem portion 33 each have a circular columnar shape. The outer diameter of the second stem portion 32 is smaller than the outer diameter of the first stem portion 31. The outer diameter of the third stem portion 33 is smaller than the outer diameter of the first stem portion 31. The second stem portion 32 is provided coaxially and continuously with the upper end of the first stem portion 31. The valve member 30 has a step portion 34. The step portion 34 is an annular plane facing upward. The step portion 34 is disposed in the part in which the second stem portion 32 and the first stem portion 31 are continuous with each other. The third stem portion 33 is provided coaxially and continuously with the lower end of the first stem portion 31. The control portion 35 is provided coaxially and continuously with the lower end of the third stem portion 33. The first stem portion 31, the second stem portion 32, the third stem portion 33, and the control portion 35 are integrally formed.

An upper portion 35a of the control portion 35 has a circular columnar shape. A lower portion 35b of the control portion 35 has a tapered shape. The lower portion 35b of the control portion 35 includes a control surface 36. The control surface 36 is an annular tapered surface facing outward in the radial direction. The control surface 36 has an outer diameter gradually decreasing from an upper end 36a to a lower end 36b. The outer diameter at the upper end 36a of the control surface 36 is larger than the inner diameter of the orifice portion 16. The outer diameter at the lower end 36b of the control surface 36 is smaller than the inner diameter of the orifice portion 16.

The movement restriction portion 37 has a circular cylindrical shape. The outer diameter of the movement restriction portion 37 is equal to the outer diameter of the first stem portion 31. The third stem portion 33 and the upper portion 35a of the control portion 35 are disposed inside the movement restriction portion 37. A lower portion of the movement restriction portion 37 includes a movement restriction surface 38. The movement restriction surface 38 is an annular tapered surface facing outward in the radial direction. The movement restriction surface 38 has an outer diameter gradually decreasing from the upper end to the lower end. The movement restriction portion 37 is welded to the third stem portion 33 or the control portion 35. The movement restriction portion 37 may be bonded to the third stem portion 33 or the control portion 35 by brazing or adhesive. Alternatively, the movement restriction portion 37 may be fixed to the third stem portion 33 by press-fitting the third stem portion 33 into the movement restriction portion 37. The movement restriction portion 37 may be fixed to the control portion 35 by press-fitting the control portion 35 into the movement restriction portion 37. The movement restriction portion 37 may be mounted to the third stem portion 33 by a threaded structure.

The taper angle of the control surface 36 is smaller than the taper angle of the valve seat 18. The taper angle of the movement restriction surface 38 is larger than the taper angle of the valve seat 18.

The valve member 30 is assembled as follows. The third stem portion 33 and the control portion 35 are inserted into the movement restriction portion 37. In a state where the control surface 36 is in contact with the upper end 16a of the valve port 15 (i.e., the inner peripheral edge of the valve seat 18), the movement restriction surface 38 is brought into contact with an outer peripheral edge 18a of the valve seat 18 by adjusting the position of the movement restriction portion 37 in the direction of the axis L. Next, the movement restriction portion 37 is bonded to the third stem portion 33 or the control portion 35. As a result, the movement restriction surface 38 comes into contact with the outer peripheral edge 18a at the same time as the control surface 36 comes into contact with the upper end 16a.

"The movement restriction surface 38 comes into contact with the outer peripheral edge 18a at the same time as the control surface 36 comes into contact with the upper end 16a" means that the electric-operated valve 1 has a timing when the control surface 36 and the movement restriction surface 38 are in contact with the valve seat 18 (the upper end 16a, the outer peripheral edge 18a). The same (including substantially the same) applies to a second embodiment and a third embodiment, which are described below. The driving section 40 moves the valve member 30 in the direction of the axis L. The direction of the axis L is a movement direction of the valve member 30. The movement of the valve member 30 opens and closes the valve port 15. The driving section 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41.

The valve stem holder 42 has a circular cylindrical shape. The valve stem holder 42 is open at the lower end and is closed at the upper end. The valve stem holder 42 is fitted into a fitting hole 41a of the rotor 41. The valve stem holder 42 rotates together with the rotor 41. A movable stopper 42s is disposed on the outer circumferential surface of the valve stem holder 42. The movable stopper 42s is a protrusion extending outward in the radial direction from the outer circumferential surface of the valve stem holder 42. The valve stem holder 42 has a stem hole 42b. The stem hole 42b is provided in an upper wall portion 42a of the valve stem holder 42. The second stem portion 32 of the valve member 30 is disposed in the stem hole 42b movably in the direction of the axis L. A washer 46 is disposed on the lower surface of the upper wall portion 42a of the valve stem holder 42. A valve closing spring 47 is disposed between the step portion 34 of the valve member 30 and the washer 46. The valve closing spring 47 is a coil spring and pushes the valve member 30 toward the valve seat 18. The inner circumferential surface of the valve stem holder 42 has an internal thread 42c. The movable stopper 42s is fixed with respect to the rotor 41.

The guide bush 43 includes a base portion 43a and a support portion 43b. The base portion 43a and the support portion 43b each have a circular cylindrical shape. The base portion 43a is press-fitted into the fitting hole 11a of the body member 11. The outer diameter of the support portion 43b is smaller than the outer diameter of the base portion 43a. The inner diameter of the support portion 43b is equal to the inner diameter of the base portion 43a. The support portion 43b is provided coaxially and continuously with the upper end of the base portion 43a. The outer circumferential surface of the support portion 43b has an external thread 43c. The external thread 43c is screwed into the internal thread 42c of the valve stem holder 42. The first stem portion 31 of the valve member 30, or the first stem portion 31 and the movement restriction portion 37 of the valve member 30 are disposed inside the guide bush 43. The guide bush 43 supports the valve member 30 movably in the direction of the axis L.

The stopper member 44 includes a stopper body 44a. The stopper body 44a has a circular cylindrical shape. The stopper body 44a is mounted to the lower end of the support portion 43b of the guide bush 43. A fixed stopper 44s is disposed on the outer circumferential surface of the stopper body 44a. The fixed stopper 44s is a protrusion extending outward in the radial direction from the outer circumferential surface of the stopper body 44a. The fixed stopper 44s is fixed with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is provided continuously with the lower end of the fixed portion 45a. A return spring 48 is disposed such that the return spring 48 surrounds the fixed member 45. The return spring 48 is a coil spring.

The stator unit 7 includes a stator 60 and a housing 70 that houses the stator 60. The stator 60 has a circular cylindrical shape. The can 20 is disposed inside the stator 60. The rotor 41 is disposed inside the can 20. The stator 60 and the can 20 are members of a stepping motor 66.

In the electric-operated valve 1, the respective central axes of the valve body 10 (the body member 11, the connection member 13), the valve port 15 (the orifice portion 16, the flow guide portion 17), the valve seat 18, the can 20, the valve member 30 (the control portion 35, the movement restriction portion 37), the rotor 41, the valve stem holder 42, the guide bush 43, and the stator 60 are aligned with the axis L.

The operation of the electric-operated valve 1 is described below.

When drive currents corresponding to pulses are supplied to the stator 60 of the stepping motor 66, the rotor 41 rotates. When the rotor 41 rotates in a first direction, a screw-feed action between the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the control surface 36 of the control portion 35 comes into contact with the upper end 16a of the valve port 15, and at the same time the movement restriction surface 38 of the movement restriction portion 37 comes into contact with the outer peripheral edge 18a of the valve seat 18. As a result, the valve port 15 is closed, and the downward movement of the valve member 30 (the movement toward the valve port 15) is restricted. When the rotor 41 further rotates in the first direction, the valve closing spring 47 is compressed, and the rotor 41 and the valve stem holder 42 move further downward. The valve member 30 does not move downward. When the movable stopper 42s of the valve stem holder 42 comes into contact with the fixed stopper 44s of the stopper member 44, the rotation of the rotor 41 in the first direction is restricted. The movable stopper 42s and the fixed stopper 44s are members of a stopper mechanism 49. The stopper mechanism 49 restricts the rotation of the rotor 41 in the first direction.

When the rotor 41 rotates in a second direction, the screw-feed action between the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45, and the control surface 36 of the control portion 35 separates from the upper end 16a of the valve port 15, and at the same time the movement restriction surface 38 of the movement restriction portion 37 separates from the outer peripheral edge 18a of the valve seat 18.

In the electric-operated valve 1, when the valve member 30 moves downward (in a valve-closing direction) during flow rate control operation, the control surface 36 and the movement restriction surface 38 come into contact with the valve seat 18 (the upper end 16a, the outer peripheral edge 18a) at the same time. When the valve member 30 moves upward (in a valve-opening direction) during the flow rate control operation, the control surface 36 and the movement restriction surface 38 separate from the valve seat 18 at the same time. In the present embodiment, cases where "actions are performed at the same time" include cases where the actions are performed at exactly the same time and cases where the actions are performed with a gap within a predetermined tolerance range. The predetermined tolerance range is a rotation range where the rotor 41 of the stepping motor 66 rotates in response to a predetermined number of pulses. In other words, cases where "actions are performed at the same time" also include a case where the movement restriction surface 38 comes into contact with the valve seat 18 while the rotor 41 rotates in response to the predetermined number of pulses after the control surface 36 comes into contact with the valve seat 18 and a case where the control surface 36 comes into contact with the valve seat 18 while the rotor 41 rotates in response to the predetermined number of pulses after the movement restriction surface 38 comes into contact with the valve seat 18. Cases where "actions are performed at the same time" also include a case where the movement restriction surface 38 separates from the valve seat 18 while the rotor 41 rotates in response to the predetermined number of pulses after the control surface 36 separates from the valve seat 18 and a case where the control surface 36 separates from the valve seat 18 while the rotor 41 rotates in response to the predetermined number of pulses after the movement restriction surface 38 separates from the valve seat 18. The "predetermined number" is desirably one. The "predetermined number" may be from 1 to 3 (about 0.02 mm maximum in terms of the amount of movement of the valve member 30), taking into account thermal expansion of the valve member 30 during normal use or variations in the shape of the valve member 30. The same (including substantially the same) applies to embodiments, which are described below.

As described above, the electric-operated valve 1 according to the present embodiment includes the valve body 10 that includes the valve port 15, and the valve member 30 that opens and closes the valve port 15. The valve member 30 includes the control portion 35 and a movement restriction portion 37. The control portion 35 includes the control surface 36 that is an outwardly tapered surface. The valve port 15 is closed when the control surface 36 is in contact with the upper end 16a of the valve port 15. The movement of the control portion 35 toward the valve port 15 is restricted when the movement restriction portion 37 is in contact with the valve body 10. The movement restriction portion 37 comes into contact with the valve body 10 at the same time as the control surface 36 comes into contact with the upper end 16a of the valve port 15.

In the electric-operated valve 1, the movement of the control portion 35 toward the valve port 15 is restricted at the same time as the valve port 15 is closed. This configuration inhibits the control surface 36 from being pressed to the upper end 16a of the valve port 15 after the valve port 15 is closed. The inhibition of pressing the control surface 36 to the upper end 16a of the valve port 15 can reduce wear of the upper end 16a of the valve port 15, even though the taper angle of the control surface 36 is small. Accordingly, it is possible to finely control the flow rate of fluid flowing through the valve port 15 when the flow rate is low, and also to extend the life of the electric-operated valve 1. In the electric-operated valve 1, the movement restriction portion 37 may come into contact with the valve body 10 when the control surface 36 is in contact with the upper end 16a of the valve port 15. This configuration also reduces wear of the upper end 16a of the valve port 15.

In addition, the valve body 10 includes the valve seat 18 that is an inwardly tapered surface enclosing the valve port 15. The movement restriction portion 37 includes the movement restriction surface 38 that is an outwardly tapered surface. The movement of the control portion 35 toward the valve port 15 is restricted when the movement restriction surface 38 is in contact with the outer peripheral edge 18a of the valve seat 18. The movement restriction surface 38 comes into contact with the outer peripheral edge 18a of the valve seat 18 at the same time as the control surface 36 comes into contact with the upper end 16a of the valve port 15. The movement restriction surface 38 separates from the valve seat 18 at the same time as the control surface 36 separates from the upper end 16a of the valve port 15. As a result, the control surface 36 closes the valve port 15 and the movement restriction surface 38 closes the outer peripheral edge 18a of the valve seat 18, thereby more effectively inhibiting valve leakage.

In the method for assembling the electric-operated valve 1, in the state where the control surface 36 is in contact with the upper end 16a of the valve port 15, the movement restriction surface 38 of the movement restriction portion 37 is brought into contact with the outer peripheral edge 18a of the valve seat 18 by adjusting the position of the movement restriction portion 37 in the direction of the axis L. Next, the movement restriction portion 37 is bonded to the third stem portion 33 or the control portion 35. This configuration eliminates high-precision machining for manufacturing the valve member 30 and valve body 10. Accordingly, it is possible to manufacture the electric-operated valve 1 in which the movement restriction portion 37 comes into contact with the valve body 10 at the same time as the control surface 36 comes into contact with the upper end 16a of the valve port 15 at low cost.

### (Second Embodiment)

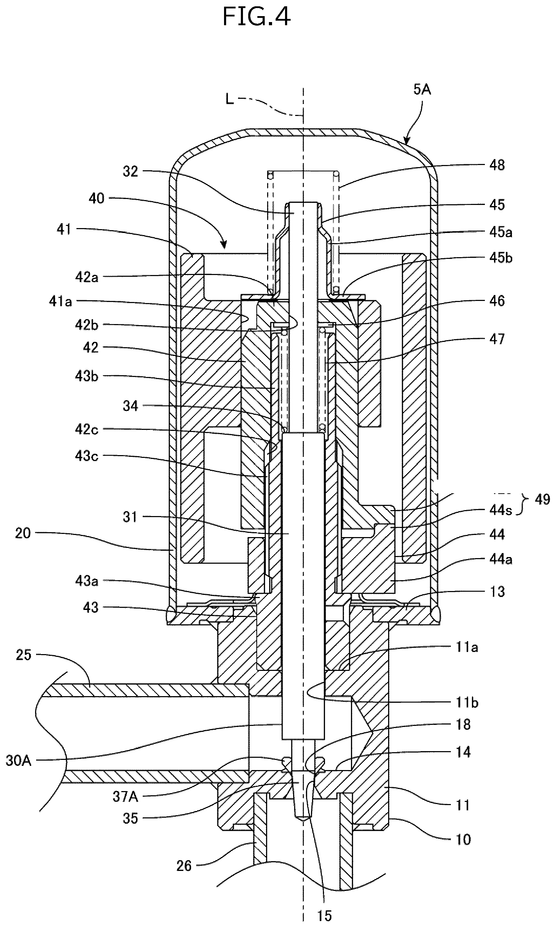

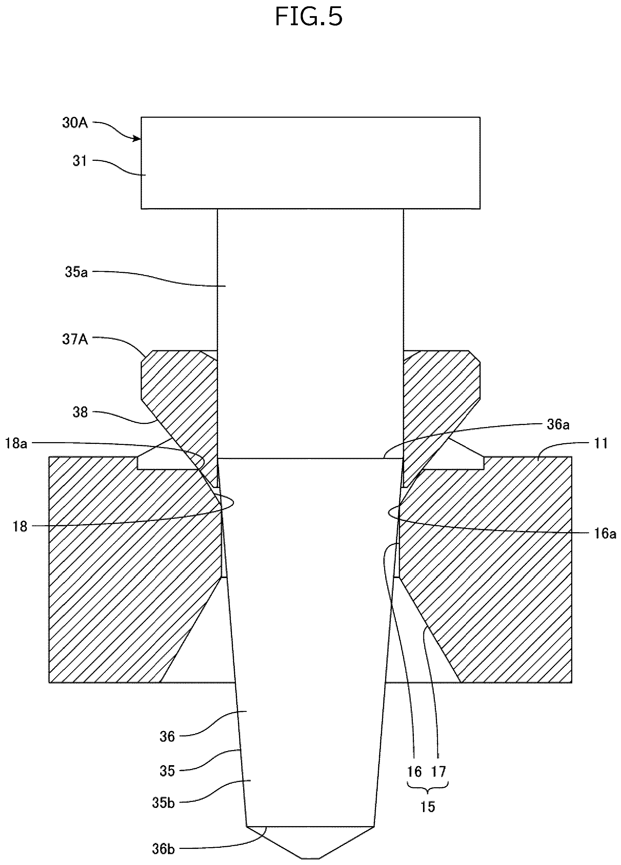

Fig. 4 is a sectional view of a valve body assembly of an electric-operated valve according to a second embodiment of the present invention. Fig. 5 is an enlarged sectional view of a valve member and members in its vicinity of the valve body assembly in Fig. 4. In Fig. 4 and Fig. 5, the valve member (excluding a movement restriction portion) is illustrated in front view. In the description of each embodiment, elements with the same configurations (including elements with substantially the same configurations) as those of the electric-operated valve 1 described above are denoted by the same reference signs as those of the electric-operated valve 1 described above, and detailed descriptions of these elements are omitted.

The electric-operated valve according to the second embodiment includes a valve body assembly 5A and a stator unit 7.

The valve body assembly 5A includes a valve body 10, a can 20, a valve member 30A, and a driving section 40.

The valve member 30A includes a first stem portion 31, a second stem portion 32, a control portion 35, and a movement restriction portion 37A.

The control portion 35 is provided coaxially and continuously with the lower end of the first stem portion 31. The first stem portion 31, the second stem portion 32, and the control portion 35 are integrally formed.

The movement restriction portion 37A has an annular shape. An upper portion 35a of the control portion 35 is disposed inside the movement restriction portion 37A. The movement restriction portion 37A includes a movement restriction surface 38. The movement restriction portion 37A is welded to the control portion 35. The movement restriction portion 37A may be bonded to the control portion 35 by brazing or adhesive. Alternatively, the movement restriction portion 37A may be fixed to the control portion 35 by press-fitting the control portion 35 into the movement restriction portion 37A.

A valve port 15 is closed when a control surface 36 is in contact with an upper end 16a of the valve port 15. The movement of the control portion 35 toward the valve port 15 is restricted when the movement restriction surface 38 of the movement restriction portion 37A is in contact with an outer peripheral edge 18a of a valve seat 18. The movement restriction surface 38 comes into contact with the valve body 10 (the outer peripheral edge 18a) at the same time as the control surface 36 comes into contact with the upper end 16a of the valve port 15. The movement restriction surface 38 separates from the valve body 10 at the same time as the control surface 36 separates from the upper end 16a of the valve port 15.

The valve member 30A is assembled as follows. The control portion 35 is inserted into the movement restriction portion 37A. In the state where the control surface 36 is in contact with the upper end 16a of the valve port 15 (i.e., the inner peripheral edge of the valve seat 18), the movement restriction surface 38 is brought into contact with the outer peripheral edge 18a of the valve seat 18 by adjusting the position of the movement restriction portion 37A in a direction of an axis L. Next, the movement restriction portion 37A is bonded to the control portion 35. As a result, the movement restriction surface 38 comes into contact with the outer peripheral edge 18a at the same time as the control surface 36 comes into contact with the upper end 16a.

The electric-operated valve according to the second embodiment has the same (including substantially the same) functions and effects as those of the electric-operated valve 1 described above.

### (Third Embodiment)

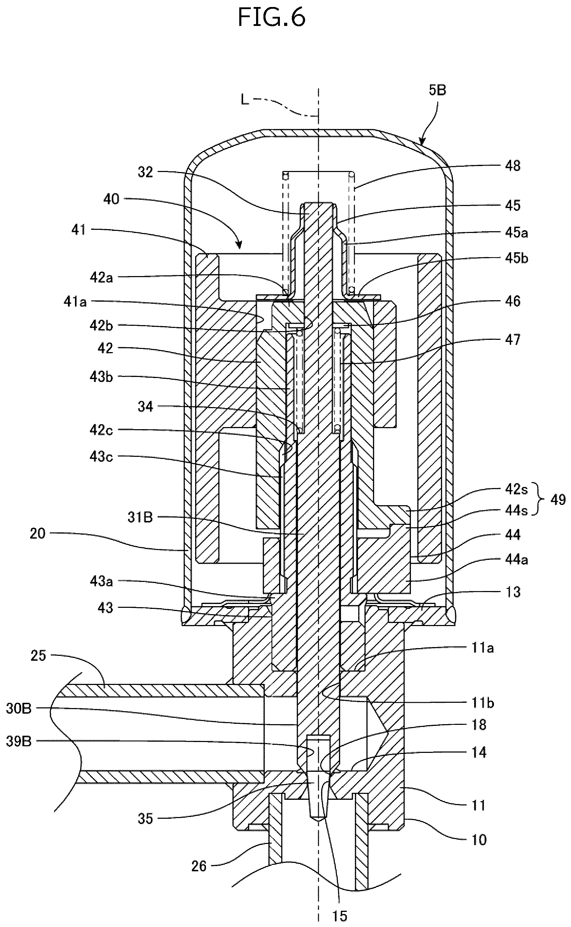

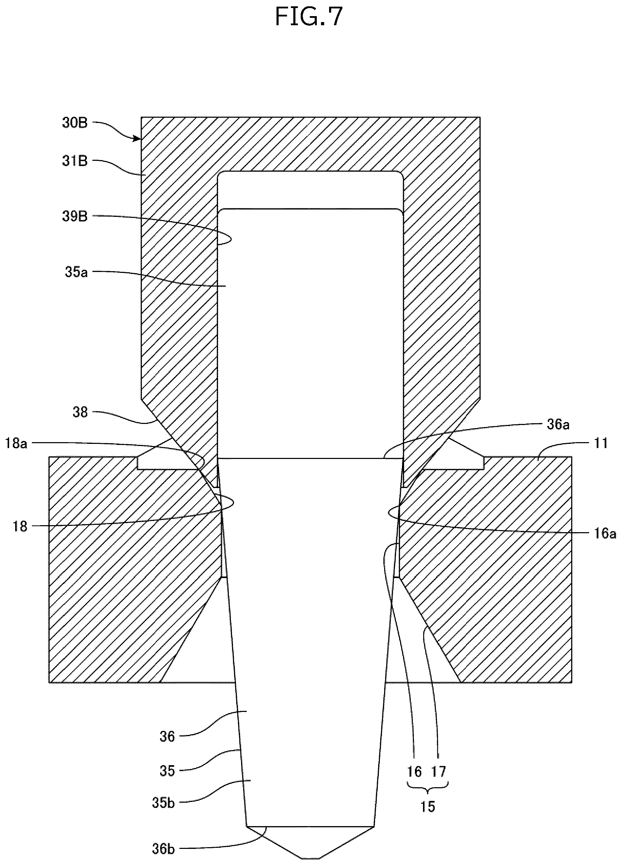

Fig. 6 is a sectional view of a valve body assembly of an electric-operated valve according to a third embodiment of the present invention. Fig. 7 is an enlarged sectional view of a valve member and members in its vicinity of the valve body assembly in Fig. 6. In Fig. 6 and Fig. 7, a control portion of the valve member is illustrated in front view.

The electric-operated valve according to the third embodiment includes a valve body assembly 5B and a stator unit 7.

The valve body assembly 5B includes a valve body 10, a can 20, a valve member 30B, and a driving section 40.

The valve member 30B includes a first stem portion 31B, a second stem portion 32, and a control portion 35.

The first stem portion 31B and the second stem portion 32 each have a circular columnar shape. The outer diameter of the second stem portion 32 is smaller than the outer diameter of the first stem portion 31B. The second stem portion 32 is provided coaxially and continuously with the upper end of the first stem portion 31B. The valve member 30B has a step portion 34. The step portion 34 is an annular plane facing upward. The step portion 34 is disposed in the part in which the second stem portion 32 and the first stem portion 31B are continuous with each other. The first stem portion 31B and the second stem portion 32 are integrally formed.

A lower portion of the first stem portion 31B includes a movement restriction surface 38. The lower portion of the first stem portion 31B includes a mounting hole 39B. The mounting hole 39B extends in a direction of an axis L and has an opening facing downward. The diameter of the mounting hole 39B is equal to the outer diameter of an upper portion 35a of the control portion 35. The control portion 35 is a single component. The upper portion 35a of the control portion 35 is disposed in the mounting hole 39B.

The control portion 35 is welded to the first stem portion 31B. The control portion 35 may be bonded to the first stem portion 31B by brazing or adhesive. Alternatively, the control portion 35 may be fixed to the first stem portion 31B by press-fitting the control portion 35 into the mounting hole 39B of the first stem portion 31B. The lower portion of the first stem portion 31B is a movement restriction portion.

A valve port 15 is closed when a control surface 36 is in contact with an upper end 16a of the valve port 15. The movement of the control portion 35 toward the valve port 15 is restricted when the movement restriction surface 38 of the first stem portion 31B is in contact with an outer peripheral edge 18a of a valve seat 18. The movement restriction surface 38 comes into contact with the valve body 10 (the outer peripheral edge 18a) at the same time as the control surface 36 comes into contact with the upper end 16a of the valve port 15. The movement restriction surface 38 separates from the valve body 10 at the same time as the control surface 36 separates from the upper end 16a of the valve port 15.

The valve member 30B is assembled as follows. In the state where the control surface 36 is in contact with the upper end 16a of the valve port 15 (i.e., the inner peripheral edge of the valve seat 18), the first stem portion 31B is moved toward the valve port 15, the control portion 35 is inserted into the mounting hole 39B, and the movement restriction surface 38 is brought into contact with the outer peripheral edge 18a of the valve seat 18 by adjusting the position of the first stem portion 31B in the direction of the axis L. Next, the first stem portion 31B is bonded to the control portion 35. As a result, the movement restriction surface 38 comes into contact with the outer peripheral edge 18a at the same time as the control surface 36 comes into contact with the upper end 16a.

The electric-operated valve according to the third embodiment has the same (including substantially the same) functions and effects as those of the electric-operated valve 1 described above.

### (First example)

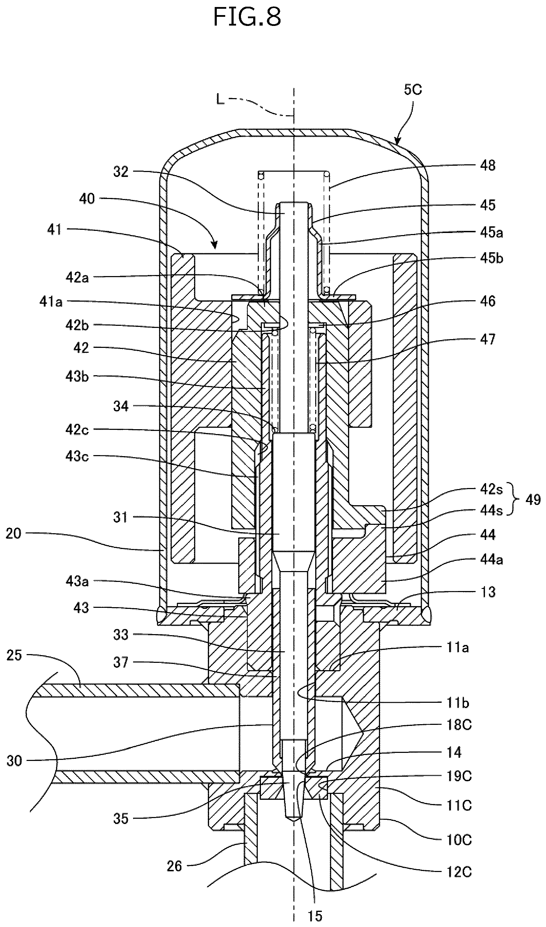

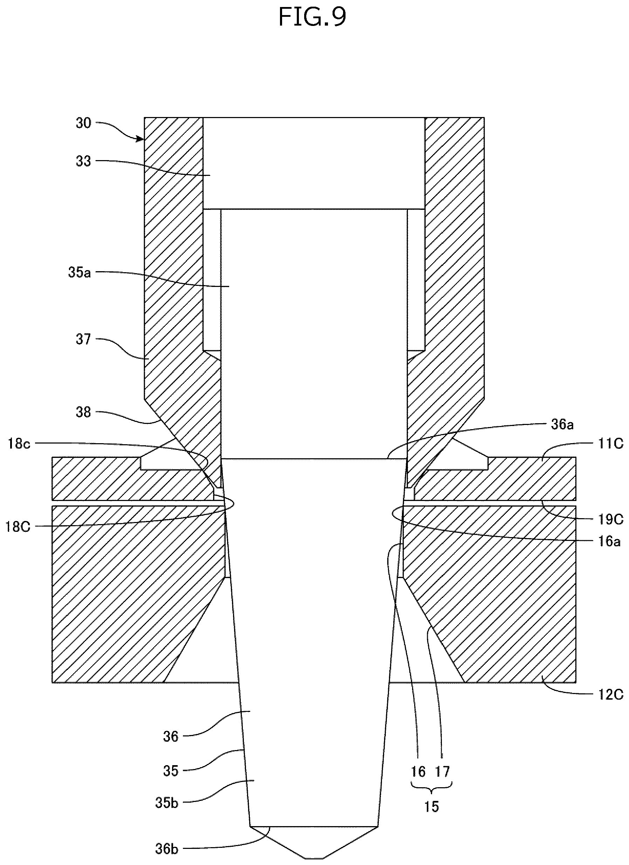

Fig. 8 is a sectional view of a valve body assembly of an electric-operated valve according to a first example, not part of the present invention. Fig. 9 is an enlarged sectional view of a valve member and members in its vicinity of the valve body assembly in Fig. 8. In Fig. 8 and Fig. 9, the valve member (excluding a movement restriction portion) is illustrated in front view.

The electric-operated valve according to the first example includes a valve body assembly 5C and a stator unit 7.

The valve body assembly 5C includes a valve body 10C, a can 20, a valve member 30, and a driving section 40.

The valve body 10C includes a body member 11C, a valve seat member 12C, and a connection member 13.

The body member 11C has a circular columnar shape. The body member 11C includes a valve chamber 14 and a mounting hole 19C. The mounting hole 19C extends in a direction of an axis L and has an opening facing downward. The mounting hole 19C is connected to the valve chamber 14 via a hole 18C.

The valve seat member 12C has a disc shape. The valve seat member 12C includes a valve port 15. The outer diameter of the valve seat member 12C is equal to the diameter of the mounting hole 19C. The valve seat member 12C is disposed in the mounting hole 19C. The valve seat member 12C is welded to the body member 11C. The valve seat member 12C may be bonded to the body member 11C by brazing or adhesive. Alternatively, the valve seat member 12C may be fixed to the body member 11C by press-fitting the valve seat member 12C into the mounting hole 19C of the body member 11C. The valve seat member 12C may be mounted to the body member 11C by a threaded structure in which the position of the valve seat member 12C in the up-and-down direction is adjustable. An upper end 16a of the valve port 15 faces the hole 18C in the direction of the axis L. The diameter of the hole 18C is larger than the inner diameter of the upper end 16a of the valve port 15. The upper end 16a of the valve port 15 is a valve seat.

The valve port 15 is closed when a control surface 36 is in contact with the upper end 16a of the valve port 15. The movement of a control portion 35 toward the valve port 15 is restricted when a movement restriction surface 38 of a movement restriction portion 37 is in contact with an upper end 18c of the hole 18C. The movement restriction surface 38 comes into contact with the valve body 10C (the upper end 18c) at the same time as the control surface 36 comes into contact with the upper end 16a of the valve port 15. The movement restriction surface 38 separates from the valve body 10C at the same time as the control surface 36 separates from the upper end 16a of the valve port 15.

The valve body assembly 5C is assembled as follows. The movement restriction portion 37 is bonded to a third stem portion 33 or the control portion 35. In the state where the movement restriction surface 38 is in contact with the upper end 18c of the hole 18C, the valve seat member 12C is inserted into the mounting hole 19C, and the control surface 36 is brought into contact with the upper end 16a of the valve port 15 by adjusting the position of the valve seat member 12C in the direction of the axis L. Next, the valve seat member 12C is bonded to the body member 11C. As a result, the movement restriction surface 38 comes into contact with the upper end 18c at the same time as the control surface 36 comes into contact with the upper end 16a.

The electric-operated valve according to the first example has the same (including substantially the same) functions and effects as those of the electric-operated valve 1 described above.

### (Second example)

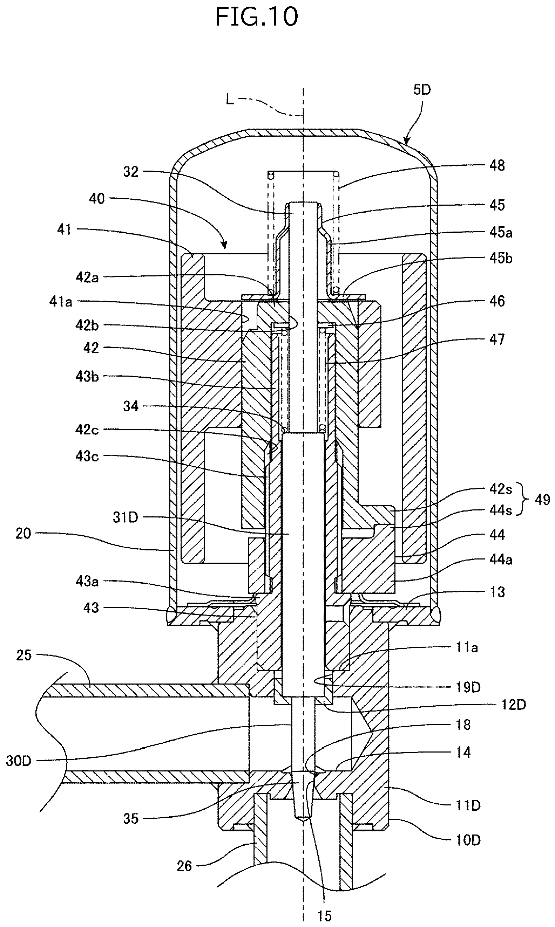

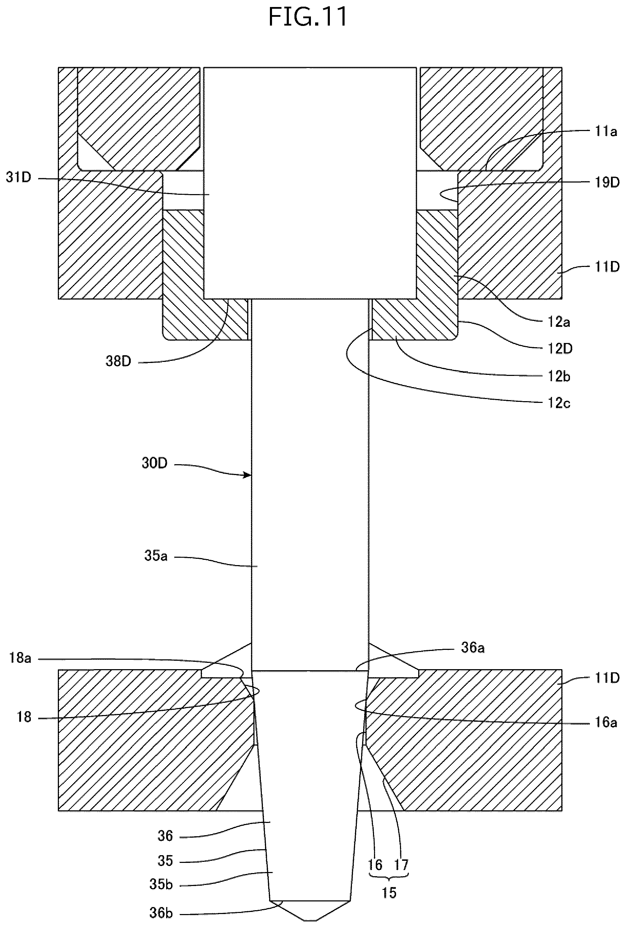

Fig. 10 is a sectional view of a valve body assembly of an electric-operated valve according to a second example, not part of the present invention. Fig. 11 is an enlarged sectional view of a valve member and members in its vicinity of the valve body assembly in Fig. 10. In Fig. 10 and Fig. 11, the valve member (excluding a movement restriction portion) is illustrated in front view.

The electric-operated valve according to the second example includes a valve body assembly 5D and a stator unit 7.

The valve body assembly 5D includes a valve body 10D, a can 20, a valve member 30D, and a driving section 40.

The valve body 10D includes a body member 11D, a movement restriction member 12D, and a connection member 13.

The body member 11D has a circular columnar shape. The body member 11D includes a valve chamber 14, a valve port 15, and a valve seat 18. The body member 11D includes a fitting hole 11a in a circular shape. The fitting hole 11a is disposed in the upper end surface of the body member 11D. A mounting hole 19D communicating with the valve chamber 14 is provided at the bottom of the fitting hole 11a. The mounting hole 19D extends in a direction of an axis L.

The movement restriction member 12D includes a peripheral wall portion 12a and a bottom wall portion 12b. The peripheral wall portion 12a has a circular cylindrical shape. The outer diameter of the peripheral wall portion 12a is equal to the diameter of the mounting hole 19D. The bottom wall portion 12b has a disc shape. The bottom wall portion 12b is provided continuously with the lower end of the peripheral wall portion 12a. A stem hole 12c is provided in the center of the bottom wall portion 12b. The movement restriction member 12D is disposed in the mounting hole 19D. The movement restriction member 12D is welded to the body member 11D. The movement restriction member 12D may be bonded to the body member 11D by brazing or adhesive. Alternatively, the movement restriction member 12D may be fixed to the body member 11D by press-fitting the movement restriction member 12D into the mounting hole 19D of the body member 11D.

The valve member 30D includes a first stem portion 31D, a second stem portion 32, and a control portion 35.

The first stem portion 31D and the second stem portion 32 each have a circular columnar shape. The outer diameter of the first stem portion 31D of the valve member 30D is equal to the inner diameter of the peripheral wall portion 12a. The outer diameter of the second stem portion 32 is smaller than the outer diameter of the first stem portion 31D. The second stem portion 32 is provided coaxially and continuously with the upper end of the first stem portion 31D. The valve member 30D has a step portion 34. The step portion 34 is an annular plane facing upward. The step portion 34 is disposed in the part in which the second stem portion 32 and the first stem portion 31D are continuous with each other. The control portion 35 is provided coaxially and continuously with the lower end of the first stem portion 31D. The first stem portion 31D, the second stem portion 32, and the control portion 35 are integrally formed.

A lower portion of the first stem portion 31D has a movement restriction surface 38D. The movement restriction surface 38D is an annular plane facing downward. The lower portion of the first stem portion 31D is disposed inside the movement restriction member 12D movably in the direction of the axis L. The movement restriction surface 38D is in contact with the bottom wall portion 12b of the movement restriction member 12D when the first stem portion 31D moves downward, and the downward movement of the first stem portion 31D is restricted. The lower portion of the first stem portion 31D is a movement restriction portion. An upper portion 35a of the control portion 35 is disposed in the stem hole 12c of the movement restriction member 12D movably in the direction of the axis L.

The valve port 15 is closed when a control surface 36 is in contact with an upper end 16a of the valve port 15. The movement of the control portion 35 toward the valve port 15 is restricted when the movement restriction surface 38D of the first stem portion 31D is in contact with the bottom wall portion 12b of the movement restriction member 12D.

The movement restriction surface 38D comes into contact with the valve body 10D (the bottom wall portion 12b) at the same time as the control surface 36 comes into contact with the upper end 16a of the valve port 15. The movement restriction surface 38D separates from the valve body 10D at the same time as the control surface 36 separates from the upper end 16a of the valve port 15.

"The movement restriction surface 38D comes into contact with the valve body 10D (the bottom wall portion 12b) at the same time as the control surface 36 comes into contact with the upper end 16a of the valve port 15" means that the electric-operated valve according to the fifth embodiment has a timing when the control surface 36 and the movement restriction surface 38D are in contact with the valve body 10D (the upper end 16a, the bottom wall portion 12b). The same (including substantially the same) applies to a fourth example described below.

The valve body assembly 5D is assembled as follows. The control portion 35 is inserted in the stem hole 12c of the movement restriction member 12D. In the state where the control portion 35 is in contact with the upper end 16a of valve port 15, the movement restriction member 12D is inserted into the mounting hole 19D, and the movement restriction surface 38D is brought into contact with the bottom wall portion 12b of the movement restriction member 12D by adjusting the position of the movement restriction member 12D in the direction of the axis L. Next, the movement restriction member 12D is bonded to the body member 11D. As a result, the movement restriction surface 38D comes into contact with the bottom wall portion 12b at the same time as the control surface 36 comes into contact with the upper end 16a.

The electric-operated valve according to the second example has the same (including substantially the same) functions and effects as those of the electric-operated valve 1 described above.

### (Third example)

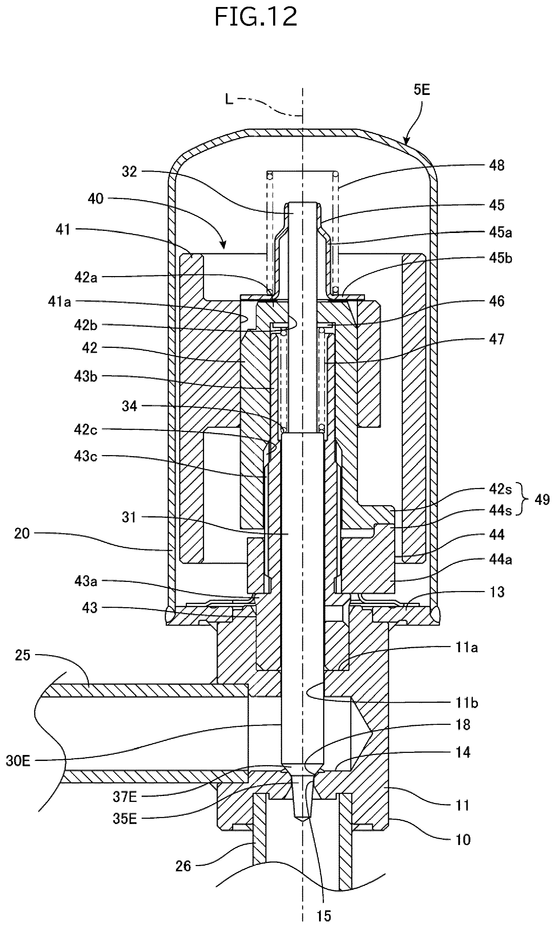

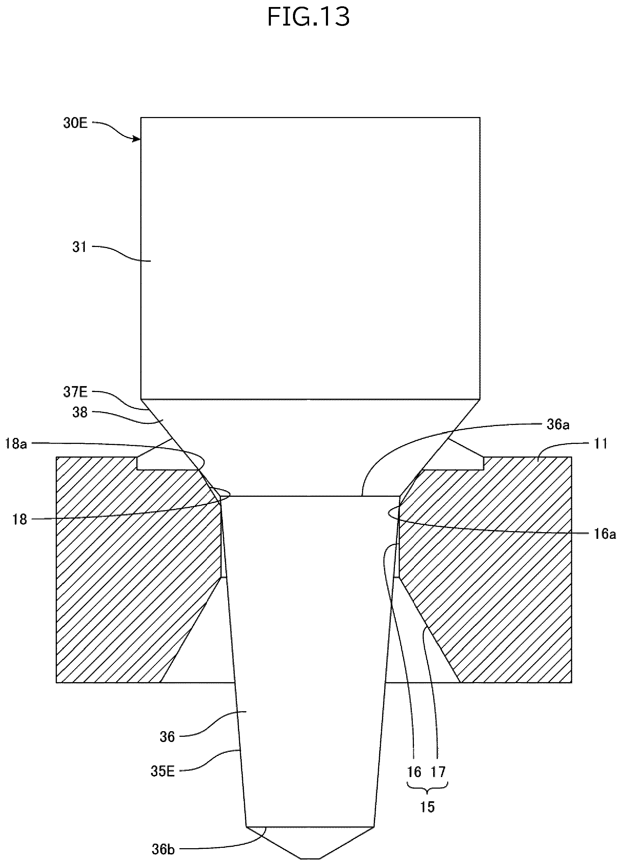

Fig. 12 is a sectional view of a valve body assembly of an electric-operated valve according to a third example, not part of the present invention. Fig. 13 is an enlarged sectional view of a valve member and members in its vicinity of the valve body assembly in Fig. 12. In Fig. 12 and Fig. 13, the valve member is illustrated in front view.

The electric-operated valve according to the third example includes a valve body assembly 5E and a stator unit 7.

The valve body assembly 5E includes a valve body 10, a can 20, a valve member 30E, and a driving section 40.

The valve member 30E includes a first stem portion 31, a second stem portion 32, a control portion 35E, and a movement restriction portion 37E.

The control portion 35E has a tapered shape with an outer diameter gradually decreasing from the upper end to the lower end. The control portion 35E includes a control surface 36.

The movement restriction portion 37E is provided coaxially and continuously with the lower end of the first stem portion 31. The movement restriction portion 37E has a tapered shape with an outer diameter gradually decreasing from the upper end to the lower end. The movement restriction portion 37E includes a movement restriction surface 38. The control portion 35E is provided coaxially and continuously with the lower end of the movement restriction portion 37E. An upper end 36a of the control surface 36 of the control portion 35E is provided continuously with the lower end of the movement restriction surface 38. The first stem portion 31, the second stem portion 32, the control portion 35E, and the movement restriction portion 37E are integrally formed.

A valve port 15 is closed when the control surface 36 is in contact with an upper end 16a of the valve port 15. The movement of the control portion 35E toward the valve port 15 is restricted when the movement restriction surface 38 of the movement restriction portion 37E is in contact with an outer peripheral edge 18a of a valve seat 18. The movement restriction surface 38 comes into contact with the valve body 10 (the outer peripheral edge 18a) at the same time as the control surface 36 comes into contact with the upper end 16a of the valve port 15. The movement restriction surface 38 separates from the valve body 10 at the same time as the control surface 36 separates from the upper end 16a of the valve port 15.

The electric-operated valve according to the third example has the same (including substantially the same; functions and effects as those of the electric-operated valve 1 described above.

### (Fourth example)

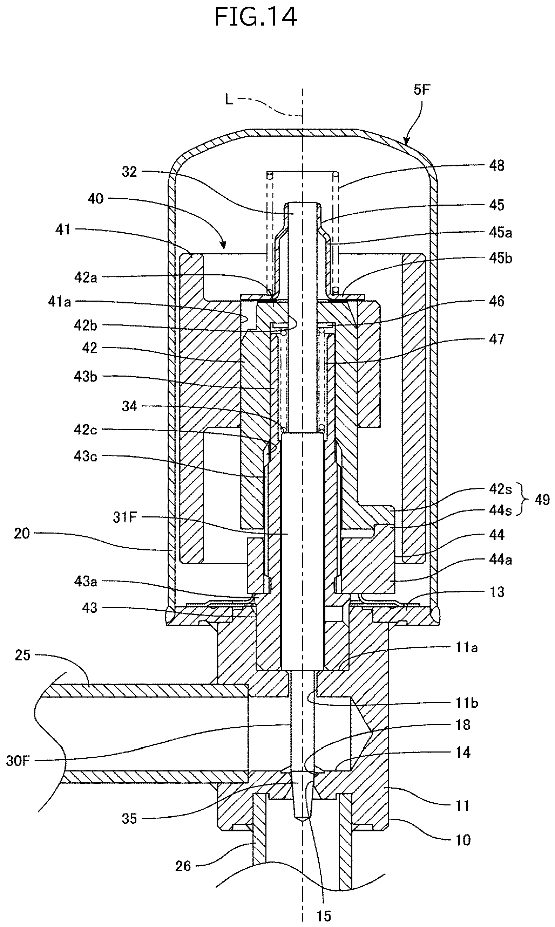

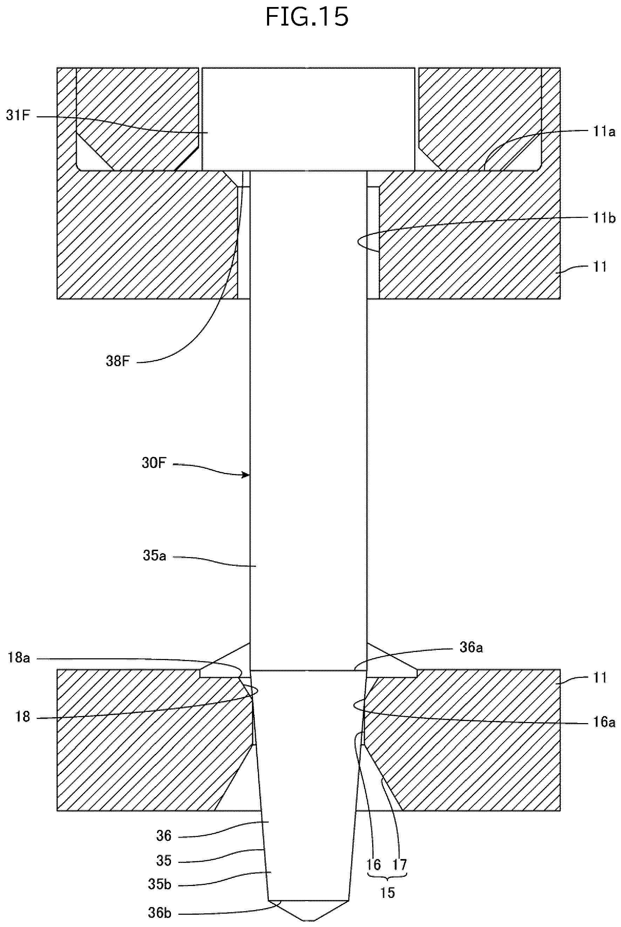

Fig. 14 is a sectional view of a valve body assembly of an electric-operated valve according to a fourth example, not part of the present invention. Fig. 15 is an enlarged sectional view of a valve member and members in its vicinity of the valve body assembly in Fig. 14. In Fig. 14 and Fig. 15, the valve member is illustrated in front view.

The electric-operated valve according to the fourth example includes a valve body assembly 5F and a stator unit 7.

The valve body assembly 5F includes a valve body 10, a can 20, a valve member 30F, and a driving section 40.

The valve member 30F includes a first stem portion 31F, a second stem portion 32, and a control portion 35.

The first stem portion 31F and the second stem portion 32 each have a circular columnar shape. The outer diameter of the second stem portion 32 is smaller than the outer diameter of the first stem portion 31F. The second stem portion 32 is provided coaxially and continuously with the upper end of the first stem portion 31F. The valve member 30F has a step portion 34. The step portion 34 is an annular plane facing upward. The step portion 34 is disposed in the part in which the second stem portion 32 and the first stem portion 31F are continuous with each other. The control portion 35 is provided coaxially and continuously with the lower end of the first stem portion 31F. The first stem portion 31F, the second stem portion 32, and the control portion 35 are integrally formed.

A lower portion of the first stem portion 31F has a movement restriction surface 38F. The movement restriction surface 38F is an annular plane facing downward. The movement restriction surface 38F comes into contact with the bottom of a fitting hole 11a of a body member 11 when the first stem portion 31F moves downward, and the downward movement of the first stem portion 31F is restricted. The lower portion of the first stem portion 31F is a movement restriction portion. An upper portion 35a of the control portion 35 is disposed in a stem hole 11b of the body member 11 movably in a direction of an axis L.

A valve port 15 is closed when a control surface 36 is in contact with an upper end 16a of the valve port 15. The movement of the control portion 35 toward the valve port 15 is restricted when the movement restriction surface 38F of the first stem portion 31F is in contact with the bottom of the fitting hole 11a of the body member 11 of the valve body 10. The movement restriction surface 38F comes into contact with the valve body 10 (the body member 11) at the same time as the control surface 36 comes into contact with the upper end 16a of the valve port 15. The movement restriction surface 38F separates from the valve body 10 at the same time as the control surface 36 separates from the upper end 16a of the valve port 15.

The electric-operated valve according to the fourth example has the same (including substantially the same) functions and effects as those of the electric-operated valve 1 described above.

### (Fifth example)

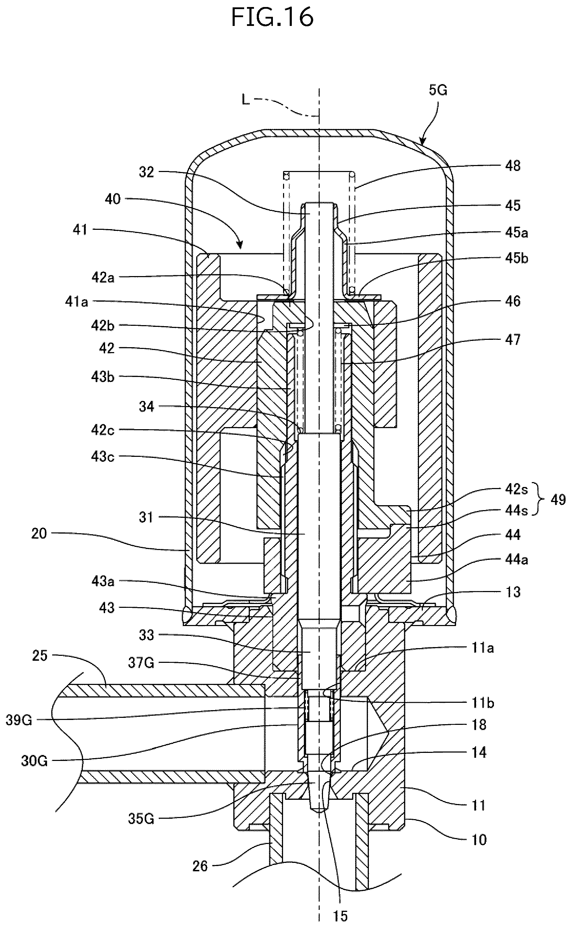

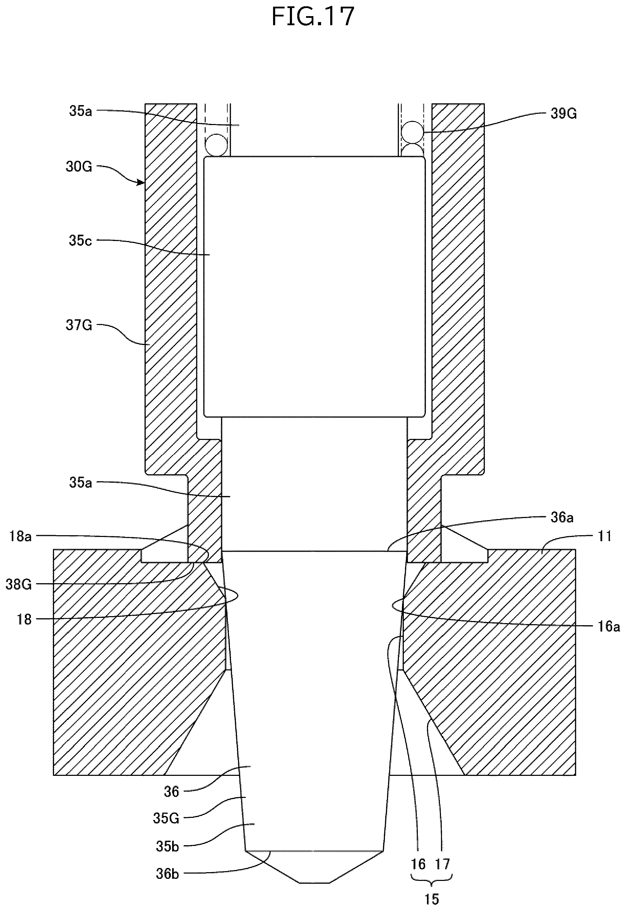

Fig. 16 is a sectional view of a valve body assembly of an electric-operated valve according to a fifth example, not part of the present invention. Fig. 17 is an enlarged sectional view of a valve member and members in its vicinity of the valve body assembly in Fig. 16. In Fig. 16 and Fig. 17, the valve member (excluding a support portion) is illustrated in front view.

The electric-operated valve according to the fifth example includes a valve body assembly 5G and a stator unit 7.

The valve body assembly 5G includes a valve body 10, a can 20, a valve member 30G, and a driving section 40.

The valve member 30G includes a first stem portion 31, a second stem portion 32, a third stem portion 33, a control portion 35G, and a support portion 37G.

The first stem portion 31, the second stem portion 32, and the third stem portion 33 are integrally formed.

The control portion 35G is a separate component from the integrated component of the first stem portion 31, the second stem portion 32, and the third stem portion 33. An upper portion 35a of the control portion 35G has a circular columnar shape. A lower portion 35b of the control portion 35G has a tapered shape. A protruding portion 35c protruding outward in the radial direction is provided at the center of the upper portion 35a in a direction of an axis L. The lower portion 35b of the control portion 35G includes a control surface 36. A valve port 15 is closed when the control surface 36 comes into contact with an upper end 16a of the valve port 15, and the movement of the control portion 35G toward the valve port 15 is restricted.

The support portion 37G has a circular cylindrical shape. The third stem portion 33 is coaxially disposed inside an upper portion of the support portion 37G. The support portion 37G is welded to the third stem portion 33. The support portion 37G may be bonded to the third stem portion 33 by brazing or adhesive. Alternatively, the support portion 37G may be fixed to the third stem portion 33 by press-fitting the third stem portion 33 into the support portion 37G. The upper portion 35a of the control portion 35G is disposed inside the support portion 37G. The support portion 37G supports the control portion 35G movably in the direction of the axis L. The inner diameter of the lower end of the support portion 37G is smaller than the outer diameter of the protruding portion 35c of the control portion 35G. Inside the support portion 37G, a spring 39G is disposed between the lower end surface of the third stem portion 33 and the protruding portion 35c of the control portion 35G. The spring 39G is a coil spring. The spring constant of the spring 39G is smaller than the spring constant of a valve closing spring 47. The spring 39G pushes the control portion 35G toward the valve port 15.

The lower portion 35b of the control portion 35G (the control surface 36) projects out from the lower end of the support portion 37G. The lower end surface of the support portion 37G is a movement restriction surface 38G that is an annular plane. The movement restriction surface 38G comes into contact with a body member 11 when the support portion 37G moves downward, and the downward movement of the support portion 37G is restricted.

In the electric-operated valve according to the eighth embodiment, for closing the valve port 15, the valve member 30G (the control portion 35G and the support portion 37G) moves toward the valve port 15, and the movement of the control portion 35G toward the valve port 15 is restricted when the control surface 36 comes into contact with the upper end 16a of the valve port 15. Next, the spring 39G is compressed, and the support portion 37G moves toward the valve port 15, and the movement restriction surface 38G of the support portion 37G is in contact with the valve body 10 (the body member 11). At this time, the control surface 36 and the movement restriction surface 38G are in contact with the valve body 10 (the upper end 16a, the body member 11). For opening the valve port 15, the support portion 37G separates from the valve body 10 and the spring 39G is extended. Next, the protruding portion 35c of the control portion 35G gets caught on the support portion 37G, the control portion 35G moves away from the valve port 15 together with the support portion 37G, and the control surface 36 separates from the upper end 16a of the valve port 15. This configuration inhibits the control surface 36 from being pressed to the upper end 16a of the valve port 15 after the valve port 15 is closed. The inhibition of pressing the control surface 36 to the upper end 16a of the valve port 15 can reduce wear of the upper end 16a of the valve port 15, even though the taper angle of the control surface 36 is small. Accordingly, it is possible to finely control the flow rate of fluid flowing through the valve port 15 when the flow rate is low, and also to extend the life of the electric-operated valve.

In this specification, the terms indicating shapes, such as "circular cylindrical" and "circular columnar", are also used for components and members substantially having the shapes indicated by the terms. For example, "a circular cylindrical member" includes a circular cylindrical member and a substantially circular cylindrical member.

## Claims

1. An electric-operated valve comprising:
a valve body (10) that includes a valve port (15); and
a valve member (30) that opens and closes the valve port (15) while being movable along an axis (L),
wherein the valve member (30) includes a stem portion (33), a control portion (35) provided coaxially and continuously with the stem portion (33) and a movement restriction portion (37),
wherein the movement restriction portion (37) is bonded to the stem portion (33) or the control portion (35),
wherein the stem portion (33) and the upper portion (35a) of the control portion (35) are disposed inside the movement restriction portion (37),
wherein the control portion (35) includes a control surface (36) that is an outwardly tapered surface,
wherein the valve port (15) is closed when the control surface (36) is in contact with one end (16a) of the valve port (15),
wherein movement of the control portion (35) toward the valve port (15) is restricted when the movement restriction portion (37) is in contact with the valve body (10),
wherein the valve body (10) includes a valve seat (18) that is an inwardly tapered surface enclosing the valve port (15), wherein the one end (16a) of the valve port (15) constitutes the inner peripheral edge of the valve seat (18),
wherein the movement restriction portion (37) includes a movement restriction surface (38) that is an outwardly tapered surface,
wherein the movement of the control portion (35) toward the valve port (15) is restricted when the movement restriction surface (38) is in contact with an outer peripheral edge (18a) of the valve seat (18),
wherein the movement restriction surface (38) comes into contact with the outer peripheral edge (18a) of the valve seat (18) at a same time as the control surface (36) comes into contact with the one end (16a) of the valve port (15), and
wherein the movement restriction surface (38) separates from the valve seat (18) at a same time as the control surface (36) separates from the one end (16a) of the valve port (15).

2. Method for assembling the electric-operated valve according to claim 1, comprising the following steps:
inserting the stem portion (33) and the control portion (35) into the movement restriction portion (37),
in a state where the control surface (36) is in contact with the one end (16a) of the valve port (15), bringing the movement restriction surface (38) into contact with the outer peripheral edge (18a) of the valve seat (18) by adjusting the position of the movement restriction portion (37) in the direction of the axis (L),
followed by bonding the movement restriction portion (37) to the stem portion (33) or the control portion (35).

## Patentansprüche

1. Elektrisch betriebenes Ventil, umfassend:
einen Ventilkörper (10), der eine Ventilöffnung (15) aufweist; und
ein Ventilelement (30), das die Ventilöffnung (15) öffnet und schließt, während es entlang einer Achse (L) beweglich ist,
wobei das Ventilelement (30) einen Schaftabschnitt (33), einen Steuerabschnitt (35), der koaxial und kontinuierlich mit dem Schaftabschnitt (33) vorgesehen ist, und einen Bewegungsbeschränkungsabschnitt (37) aufweist,
wobei der Bewegungsbeschränkungsabschnitt (37) mit dem Schaftabschnitt (33) oder dem Steuerabschnitt (35) verbunden ist,
wobei der Schaftabschnitt (33) und der obere Abschnitt (35a) des Steuerabschnitts (35) innerhalb des Bewegungsbeschränkungsabschnitts (37) angeordnet sind,
wobei der Steuerabschnitt (35) eine Steuerfläche (36) aufweist, die eine sich nach außen verjüngende Fläche ist,
wobei die Ventilöffnung (15) geschlossen ist, wenn die Steuerfläche (36) in Kontakt mit einem Ende (16a) der Ventilöffnung (15) ist,
wobei die Bewegung des Steuerabschnitts (35) in Richtung der Ventilöffnung (15) beschränkt ist, wenn der Bewegungsbeschränkungsabschnitt (37) in Kontakt mit dem Ventilkörper (10) ist,
wobei der Ventilkörper (10) einen Ventilsitz (18) aufweist, der eine sich nach innen verjüngende Fläche ist, die die Ventilöffnung (15) umschließt, wobei das eine Ende (16a) der Ventilöffnung (15) die innere Umfangskante des Ventilsitzes (18) bildet,
wobei der Bewegungsbeschränkungsabschnitt (37) eine Bewegungsbeschränkungsfläche (38) aufweist, die eine sich nach außen verjüngende Fläche ist,
wobei die Bewegung des Steuerabschnitts (35) in Richtung der Ventilöffnung (15) beschränkt ist, wenn die Bewegungsbeschränkungsfläche (38) in Kontakt mit einer äußeren Umfangskante (18a) des Ventilsitzes (18) ist,
wobei die Bewegungsbeschränkungsfläche (38) in Kontakt mit der äußeren Umfangskante (18a) des Ventilsitzes (18) zur selben Zeit kommt, zu der die Steuerfläche (36) in Kontakt mit dem einen Ende (16a) der Ventilöffnung (15) kommt, und
wobei sich die Bewegungsbeschränkungsfläche (38) von dem Ventilsitz (18) zur selben Zeit trennt, zu der sich die Steuerfläche (36) von dem einen Ende (16a) der Ventilöffnung (15) trennt.

2. Verfahren zum Zusammenbauen des elektrisch betriebenen Ventils nach Anspruch 1, umfassend die folgenden Schritte:
Einsetzen des Schaftabschnitts (33) und des Steuerabschnitts (35) in den Bewegungsbeschränkungsabschnitt (37),
in einem Zustand, in dem die Steuerfläche (36) in Kontakt mit dem einen Ende (16a) der Ventilöffnung (15) ist, Bringen der Bewegungsbeschränkungsfläche (38) in Kontakt mit der äußeren Umfangskante (18a) des Ventilsitzes (18) durch Einstellen der Position des Bewegungsbeschränkungsabschnitts (37) in der Richtung der Achse (L),
gefolgt von Verbinden des Bewegungsbeschränkungsabschnitts (37) mit dem Schaftabschnitt (33) oder dem Steuerabschnitt (35).

## Revendications

1. Soupape à commande électrique comportant :
un corps de soupape (10) qui inclut un orifice de soupape (15) ; et
un élément de soupape (30) qui ouvre et ferme l'orifice de soupape (15) tout en étant mobile le long d'un axe (L),
dans laquelle l'élément de soupape (30) inclut une partie de tige (33), une partie de commande (35) agencée coaxialement et en continu par rapport à la partie de tige (33) et une partie de restriction de mouvement (37),
dans laquelle la partie de restriction de mouvement (37) est fixée à la partie de tige (33) ou à la partie de commande (35),
dans laquelle la partie de tige (33) et une partie supérieure (35a) de la partie de commande (35) sont disposées à l'intérieur de la partie de restriction de mouvement (37),
dans laquelle la partie de commande (35) inclut une surface de commande (36) qui est une surface évasée vers l'extérieur,
dans laquelle l'orifice de soupape (15) est fermé lorsque la surface de commande (36) est en contact avec une extrémité (16a) de l'orifice de soupape (15),
dans laquelle un mouvement de la partie de commande (35) vers l'orifice de soupape (15) est restreint lorsque la partie de restriction de mouvement (37) est en contact avec le corps de soupape (10),
dans laquelle le corps de soupape (10) inclut un siège de soupape (18) qui est une surface évasée vers l'intérieur entourant l'orifice de soupape (15), dans laquelle l'extrémité (16a) de l'orifice de soupape (15) constitue le bord périphérique intérieur du siège de soupape (18),
dans laquelle la partie de restriction de mouvement (37) inclut une surface de restriction de mouvement (38) qui est une surface évasée vers l'extérieur,
dans laquelle le mouvement de la partie de commande (35) vers l'orifice de soupape (15) est restreint lorsque la surface de restriction de mouvement (38) est en contact avec un bord périphérique extérieur (18a) du siège de soupape (18),
dans laquelle la surface de restriction de mouvement (38) vient en contact avec le bord périphérique extérieur (18a) du siège de soupape (18) en même temps que la surface de commande (36) vient en contact avec une extrémité (16a) de l'orifice de soupape (15), et
dans laquelle la surface de restriction de mouvement (38) se sépare du siège de soupape (18) en même temps que la surface de commande (36) se sépare de l'extrémité (16a) de l'orifice de soupape (15).

2. Procédé pour assembler la soupape à commande électrique selon la revendication 1, comportant les étapes suivantes :
insérer la partie de tige (33) et la partie de commande (35) dans la partie de restriction de mouvement (37),
dans un état où la surface de commande (36) est en contact avec l'extrémité (16a) de l'orifice de soupape (15), mettre la surface de restriction de mouvement (38) en contact avec le bord périphérique extérieur (18a) du siège de soupape (18) en réglant la position de la partie de restriction de mouvement (37) dans la direction de l'axe (L),
fixer ensuite la partie de restriction de mouvement (37) à la partie tige (33) ou à la partie de commande (35).
